# EUROPÄISCHE PATENTANMELDUNG

(11) **EP 2 072 824 A2**
(43) Veröffentlichungstag der Anmeldung: **24.06.2009**
(21) Anmeldenummer: 08022014.8
(22) Anmeldetag: 18.12.2008
(51) Int. Cl.: F04D 13/06, F04D 25/08, H02K 1/20, H02K 3/24, H02K 7/14, H02K 9/06

(54) **Elektromotor beziehungsweise Generator**

(30) Priorität: 20.12.2007 DE 102007062540
(71) Anmelder: SycoTec GmbH & Co. KG, 88299 Leutkirch im Allgäu (DE)
(72) Erfinder: Bischof, Thomas, 87758 Illerbeuren (DE); Stehmer, Sandra, geb. Maier, 88410 Bad Wurzach (DE); Kämpfer Oliver,, 87700 Memmingen (DE)
(74) Vertreter: Schulz, Manfred

(57) **Zusammenfassung**

Die Erfindung betrifft einen Elektromotor zur Förderung von gasförmigen und/oder flüssigen Medien. Die Erfindung betrifft auch einen Generator. Der Elektromotor beziehungsweise der Generator besitzt einen einen Rotormagneten aufweisenden Rotor. Der Rotor wird umgeben von einem Stator. Der Stator besitzt mindestens eine, von zumindest einem Statorzahn begrenzte Statornut. Zumindest ein Teil der Statornut dient als Mediendurchflussöffnung.

## Beschreibung

Die Erfindung betrifft einen Elektromotor, insbesondere zur Förderung von gasförmigen und/oder flüssigen Medien, beziehungsweise einen Generator.

Bekanntermaßen ist das Prinzip eines Elektromotors und das Prinzip eines Generators eng verwandt. Ein Elektromotor wandelt elektrische in mechanische Energie um, ein Generator geht den umgekehrten Weg und wandelt mechanische Energie in elektrische Energie.

Der Elektromotor wird zum Beispiel als Antrieb für die Förderung von gasförmigen oder flüssigen Medien eingesetzt, der Generator wird aufgrund der Bewegung von gasförmigen oder flüssigen Medien verwendet. Da die Funktionsweise zwischen diesen beiden Maschinen sehr ähnlich ist, umfasst die Erfindung beide Gegenstände, wobei oftmals der Anwendungsfall des Elektromotors beschrieben wird, der aber auch auf den Anwendungsfall eines erfindungsgemäßen Generators übertragbar ist und dieser somit mit umfasst und offenbart ist.

Der Elektromotor beziehungsweise der Generator weist einen Rotor auf sowie einen den Rotor umgebenden Stator. Auf dem Rotor ist ein Rotormagnet, zum Beispiel ein Permanentmagnet vorgesehen.

Bekannte Elektromotoren beziehungsweise Generatoren sind so realisiert, dass aus einem Gehäuse eine Antriebswelle herausragt, die dann für den Anschluss des Förderteiles oder des Turbinenrades usw. dient. Diese Vorgehensweise bedingt, dass die rotierende Welle abzudichten ist, um zu vermeiden, dass gasförmige oder flüssige Medien in das Innere des Elektromotors beziehungsweise Generators gelangen. Auch ist der Elektromotor in einem separaten Gehäuse und daher getrennt von dem übrigen Anwendungsbereich zu realisieren, was unter Umständen platzaufwendig ist.

Aus dem Stand der Technik sind mehrere Lösungen bekannt, die einen Elektromotor bzw. einen Generator dahingehend verbessern sollen, daß die Kühlung des Rotors bzw. des Stators verbessert werden soll. So ist gemäß einer Lösung des Standes der Technik ein Mehrfachparallelleiter für Wicklungen elektrischer Geräte mit wenigstens einem Kühlkanal für ein Kühlmittel ausgestattet.

Eine weitere Lösung des Standes der Technik betrifft einen Turbogenerator, der in seiner Leiternut eine Subnut aufweist, in der ein Kühlgas strömt, welches die Leiterstäbe von innen her kühlen soll.

Ebenfalls zur Kühlung eines Generators ist eine Lösung bekannt, bei der in der Leiterwicklung wenigstens ein von einem Fluid durchströmbarer Kanal vorgesehen ist.

Es ist weiterhin eine Lösung des Standes der Technik bekannt geworden, bei der im unteren Bereich von Statornuten Kühlrohre angeordnet sind.

Ähnlich wie bei der zuerst erwähnten Lösung des Standes der Technik mit Mehrfachparallelleitern ist eine weitere Lösung bekannt, bei der Luftkanäle im Bereich der Wicklung vorgesehen sind, wobei eine Luftzirkulation zwischen dem Stator und der Ankerwelle stattfinden kann.

Eine weitere Lösung des Standes der Technik zeichnet sich dadurch aus, daß eine stirnseitige Zufuhr eines Kühlmediums über wenigstens in den Rotor integrierten Gasleitring erfolgt, wodurch ebenfalls eine verbesserte Kühlung erreicht werden soll.

Die vorliegende Erfindung hat es sich zur Aufgabe gemacht, eine möglichst platzsparende Anordnung oder Konstruktion des Elektromotors beziehungsweise Generators zur Verfügung zu stellen.

Zur Lösung dieser Aufgabe geht die Erfindung aus von einem Elektromotor beziehungsweise Generator, wie eingangs beschrieben, und schlägt einen Elektromotor, insbesondere zur Förderung von glasförmigen Medien oder eines Generators, vor, der in den das Medium führenden Bereich einsetzbar ist und der einen Rotormagneten bzw.Kurzschlußläufer aufweisenden Rotor und einen den Rotor umgebenden Stator aufweist, der Stator mindestens eine von zumindest einem Statorzahn begrenzte Statornut aufweist und zumindest ein Teil der Statornut/en als Mediendurchflussöffnung für das zu fördernde Medium dient.

Gerade in einem Anwendungsfalls, wo der Elektromotor ein gasförmiges oder flüssiges Medium zu bewegen oder zu beschleunigen hat beziehungsweise aufgrund der Bewegung des Mediums durch den Generator Strom gewonnen wird, stören normalerweise die Bauteile im Durchflusskanal des Mediums. Dabei ist es im Stand der Technik bekannt, auf einen möglichst geringen Luftspalt zwischen dem Rotor und dem Stator zu achten und einen möglichst hohen Kupferfüllfaktor im Stator zu realisieren, das heißt eine hohe Wicklungszahl des Elektromagneten beziehungsweise der Spule zu realisieren, um einen guten Wirkungsgrad zu erreichen. Dies resultiert im Stand der Technik zu einer verhältnismäßig engen Bauform, weswegen der Antriebsbereich (sowohl für den Elektromotor wie auch für den Generator) auf der aus dem Motorbeziehungsweise Generatorgehäuse herausragenden Welle angeordnet war.

Die Erfindung schlägt gegenüber diesem Stand der Technik einen ganz anderen Weg ein. Es wird bewusst der Kupferfüllfaktor, also der Anteil an Stratorwicklung, in dem Elektromotor beziehungsweise Generator reduziert, wodurch die Statornut nicht mehr nur oder ausschließlich zur Aufnahme der Statorwicklung dient, sondern nun auch zusätzlich oder ausschließlich als Mediendurchflussöffnung Verwendung findet.

Durch den erfindungsgemäßen Vorschlag ist es jetzt möglich, den Elektromotor beziehungsweise den Generator in den das Medium führenden Bereich, also z. B. das Kanalsystem oder Schlauch usw. zu integrieren oder mit zu realisieren, wodurch eine sehr platzsparende Konstruktion realisierbar ist. Im Idealfall ist ein separates Gehäuse für den Elektromotor beziehungsweise Generator gar nicht mehr notwendig, da dies von den den Medienfluss begrenzenden Kanalwänden und -gehäusen mit realisiert ist.

Die Erfindung umfasst dabei grundsätzlich folgende zwei Hauptgedanken.

Bei einer erfindungsgemäßen Ausgestaltung ist an dem Stator nur ein Statorzahn vorgesehen. Die daraus resultierende eine Statornut dient zumindest teilweise als Mediendurchflussöffnung. Der übrige Teil nimmt die Statorwicklung auf.

In einer weiteren Ausprägung der Erfindung sind an dem Stator mindestens zwei Statorzähne vorgesehen. Die daraus resultierenden Statornuten dienen zumindest teilweise als Mediendurchflussöffnungen.

In einem anderen, oftmals die häufigere Realisierungsvariante der Erfindung besitzt der Stator eine Vielzahl von Statornuten, wobei die verschiedenen Statornuten auch unterschiedlich genützt werden. In diesem Ausführungsbeispiel sind dann z. B. einige Statornuten wie üblich mit der Statorwicklung voll ausgefüllt und dienen nicht dem Mediendurchfluss. Eine andere Gruppe von Statornuten dient zumindest teilweise der Mediendurchflussöffnung, das heißt der Kupferfüllfaktor hier ist bereits gegenüber der vorgenannten ersten Gruppe reduziert, aber nicht gleich 0!

In einer dritten Variante ist vorgesehen, dass die an sich bekannte Statornut ausschließlich der Mediendurchflussöffnung eingesetzt ist, also keine Statorwicklung aufnimmt.

Es ist klar, dass ein Generator oder Elektromotor nach der Erfindung natürlich auch Mischformen der vorgenannten erfindungsgemäßen Varianten besitzen kann.

In einer weiteren erfindungsgemäßen Ausgestaltung ist vorgesehen, dass das nach innen weisende Ende des Statorzahnes eine Verbreiterung besitzt. Diese oben sitzende Verbreiterung bewirkt eine bessere Verteilung des magnetischen Flusses und reduziert das magnetische Rastmoment.

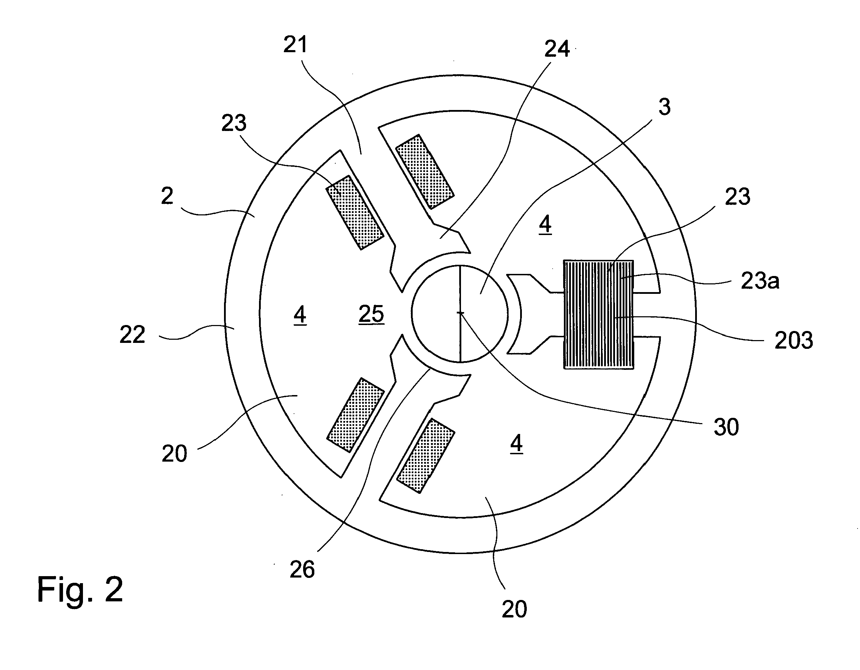

In einer bevorzugten Variante der Erfindung ist vorgesehen, dass der Statorzahn als Lagerung für den Rotor dient. Durch diese erfindungsgemäße Variante wird erheblich Platz eingespart und der Statorzahn (beziehungsweise mehrere Statorzähne) doppelt genützt. Er dient nicht nur zur Abgrenzung der Statornut, sondern bildet auch eine Lagerung für den Rotor, wobei hierzu z. B. ein separates Lager vorgesehen ist, welches sich dann über den Statorzahn in das Gehäuse des Elektromotors (welches zum Beispiel mit der Leitung des gasförmigen beziehungsweise flüssigen Mediums identisch ist) abstützt. Die Lagerung kann auch von dem umspritzten bzw. umgossennen Wickelkopf (vergleiche Fig. 2) getragen werden.

Geschickterweise ist vorgesehen, dass der Elektromotor beziehungsweise der Generator zwei oder mehr, insbesondere drei bzw. ein Vielfaches von drei in Umfangsrichtung äquidistant angeordnete Statorzähne aufweist. Hierdurch wird in einfacher Weise eine effektive Lagerung des Rotors zur Verfügung gestellt, wenn nämlich die in Umfangsrichtung äquidistant angeordneten Statorzähne gleichzeitig auch das Lager für den Rotor bilden beziehungsweise tragen. Durch die äquidistante Anordnung ist auch eine symmetrische Anordnung möglich, wobei zwischen den Statorzähnen in den Statornuten ausreichend Platz für den Mediendurchfluss verbleibt. Es resultiert eine sehr platzsparende Anordnung des Elektromotors beziehungsweise Generators. Es ist klar, dass durch die Anzahl der Statorzähne auch die Anzahl der Statornuten festgelegt ist. Die Anzahl der Statornuten entspricht der Anzahl der Statorzähne. Die Ausgestaltung der Statorzähne ist dabei in der Regel gleichartig, um in Umfangsrichtung immer gleiche magnetische Eigenschaften zu realisieren.

In einer bevorzugten Variante der Erfindung ist vorgesehen, dass die Summe der Umfangswinkel der Statornuten größer als 300°, bevorzugt größer als 330° ist. Erfindungsgemäß wird vorgeschlagen, dass der überwiegende Teil des Stators als Statornuten ausgebildet ist und nur ein geringer Teil als Statorzähne realisiert ist und, wenn ein entsprechend geringer Kupferfüllfaktor beziehungsweise eine geringe Anzahl von Statorwicklungen vorgesehen sind, eine sehr große Mediendurchflussöffnung resultiert.

Vorteilhafterweise ist der Stator aus einer Mehrzahl hintereinander angeordneter, gleicher Statorscheiben gebildet. Die Statorscheibe ist in Draufsicht z.B ringartig, rund, oval, eckig usw. ausgebildet . Die Statorscheiben bestehen dabei z. B. aus einem entsprechenden Statorblech, das in die gewünschte Form gestanzt beziehungsweise formgebend umgeformt wurde. Der Aufbau des Stators aus einer Vielzahl von Statorscheiben erlaubt es, auch verhältnismäßig komplexe Ausgestaltungen des Stators, zum Beispiel bei der Anordnung der Statorzähne und der Statornuten, in einfacher Weise zu realisieren. Auch dient die scheibenweise Ausgestaltung des Stators der Unterdrückung von Wirbelströmen im Stator.

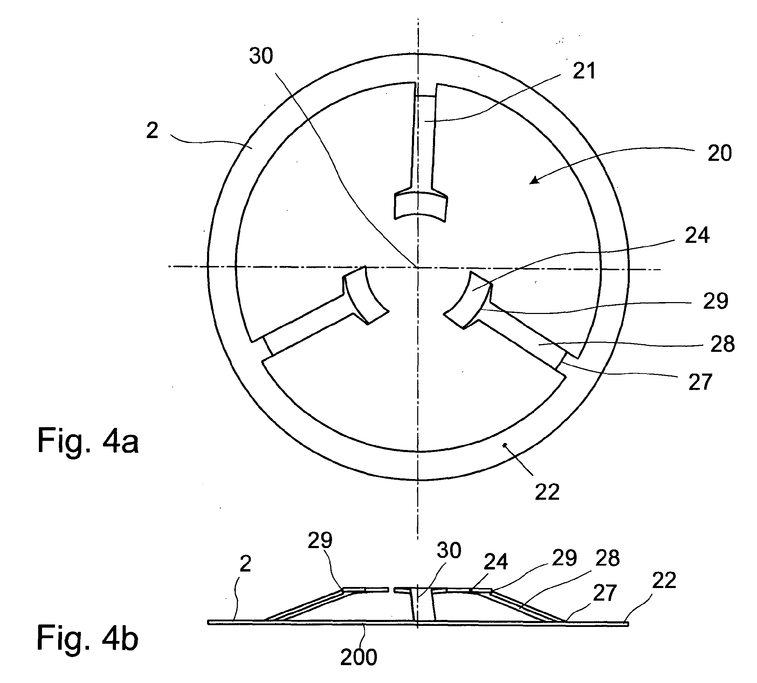

In einer erfindungsgemäßen Variante ist vorgesehen, dass der Statorzahn in axialer Richtung abgewinkelt ist. Durch das Abwinkeln der Statorzähne wird ein axialer Versatz zwischen dem Rotormagnet beziehungsweise dem Rotorpaket und dem Statorrücken ermöglicht. Dies kann zum Beispiel durch entsprechend abgewinkelte Statorscheiben (vergleiche Fig. 4b) erreicht werden.

Hieraus resultiert, dass das axiale Zentrum des Stators und das axiale Zentrum des Rotors, in axialer Richtung gesehen, verschoben sind. Hierfür existieren auch noch andere Realisierungsvorschläge.

In einer bevorzugten Variante der Erfindung ist vorgesehen, dass der Elektromotor beziehungsweise Generator dadurch ausgezeichnet ist, dass die Lagerung des Rotors auf einer axialen Position innerhalb der Statorwicklung vorgesehen ist. Dadurch wird ein gutes Zusammenwirken der magnetisch wirksamen Elemente erreicht.

Geschickterweise ist vorgesehen, dass die den Rotor tragende Rotorwelle auch einen medienfördernden Teil, insbesondere ein Förderrad, einen Förderpropeller oder eine Förderschnecke aufweist. Hierdurch wird ein Direktantrieb des das Medium beschleunigenden Bauteiles erreicht. In gleicher Weise besitzt auch der Generator ein von dem Mediumstrom bewegtes beziehungsweise angetriebenes Teil. Dies kann in analoger Weise ein Förderrad, ein Förderpropeller oder auch eine Förderschnecke sein, die aufgrund der Bewegung des Mediums den Rotor in Rotation versetzt.

In einer weiteren Variante der Erfindung ist vorgesehen, dass der medienfördernde beziehungsweise medienangetriebene Teil an einem frei auskragenden Teil der Rotorwelle vorgesehen ist. Somit ist dieses Teil etwas von dem magnetisch wirkenden Elementen distanziert und der Störeinfluss hierdurch entsprechend reduziert, was günstig ist für den Wirkungsgrad. In analoger Weise ist es natürlich auch möglich, die medienfördernden beziehungsweise medienangetriebenen Teile zwischen zwei Lagern der Rotorwelle vorzusehen und dann auf einen entsprechend auskragenden Teil der Rotorwelle zu verzichten.

Durch einen innenverkleidenden Stator, wie in einer erfindungsgemäßen Variante vorgeschlagen wird, ist es möglich, die Statorwicklung entsprechend zu schützen. Dies ist insbesondere dann von Vorteil, wenn sehr agressive Medien den Elektromotor beziehungsweise den Generator durchströmen.

Die erfindungsgemäß definierte Aufgabe wird durch einen Elektromotor beziehungsweise Generator gelöst, bei welchem die Lagerung des Rotors auf Höhe der axialen Position der Statorwicklung vorgesehen ist. Auf eine bislang bekannte örtliche Beabstandung der Lagerung des Rotors und der Statorwicklung wird hier bewusst verzichtet, wodurch eine sehr enge und platzsparende Anordnung des Elektromotors beziehungsweise Generators resultiert.

Der erfindungsgemäße Elektromotor wird in den unterschiedlichsten Einsatzbereichen verwendet. Er findet z. B. Verwendung in einem elektrisch unterstützten Turbolader oder in einer Fördervorrichtung zum Transport explosiver Gase, Stäube, Dämpfe, Flüssigkeiten, Lebensmitteln, Pasten oder für klebende Stoffe. Bevorzugterweise ist der erfindungsgemäße Elektromotor z. B. auch in Lüftungseinrichtungen oder auch in Pumpen vorgesehen, wobei die Erfindung sich insbesondere eignet für Pumpen, die für agressive Medien, wie z. B. Salzwasser oder chemische Lösungen usw. eingesetzt zu werden. Der Elektromotor findet auch Verwendung als Antrieb in dentalen oder chirurgischen Geräten, da der Motor auch von den unterschiedlichsten Medien durchströmt werden kann und dabei problemlos funktioniert. Erfindungnsgemäß sind sehr platzsparende Elektroantriebe realisierbar, die gerade im dentalen oder chirurgischen Bereich einen großen Einsatzbereich haben.

Darüber hinaus findet der erfindungsgemäße Elektromotor auch in desinfizierbaren beziehungsweise sterilisierbaren Pumpen, Spaltrohrpumpen, Dosierpumpen, Mikropumpen, Einwegpumpen oder mehrstufigen Pumpensystemen, wie z. B. auch Kreiselpumpen Verwendung.

Ein wesentlicher Vorzug der Erfindung liegt insbesondere darin, dass ein Medientransport in axialer Richtung (bezogen auf die Rotorachse) vorgesehen ist. Daher eignet sich der erfindungsgemäße Elektromotor auch zur Verwendung als Antrieb einer Fördervorrichtung unmittelbar in der Förderleitung, zum Beispiel dem Leitungskanal oder einem entsprechenden Gehäuse, ein zusätzliches Gehäuse und zusätzlicher Platzbedarf für den Elektromotor kann dadurch vermieden werden. Natürlich zeichnen sich der erfindungsgemäß ausgestaltete Turbolader, die erfindungsgemäß ausgestalteten Fördervorrichtungen, Pumpen, Lüftungseinrichtungen mit einem solchen Motor dadurch aus, dass sie den Motor in diesen Geräten integriert realisiert aufweisen und insgesamt einen geringeren Platzbedarf besitzen, beziehungsweise kompakter bauen.

Das erfindungsgemäße Konzept ist nicht nur als Elektromotor realisierbar, sondern auch als Generator einsetzbar. Der Generator wird dabei z. B. in einer Turbine eingesetzt, insbesondere in einer Gas-, Wasser- oder Dampfturbine. Daneben kann der erfindungsgemäße Generator auch in Vorrichtungen zur Medienflussmessung Verwendung finden, wobei insbesondere die im Generator erzeugte Generatorspannung zur Auswertung des Medienflusses dient.

Die Erfindung bezieht sich dabei nicht nur auf den Elektromotor oder den Generator, wie beschrieben, beziehungsweise deren vorteilhafte Verwendung in den verschiedensten anderen Vorrichtungen oder Geräten, sondern umfasst eben auch diese Vorrichtungen und Geräte, die mit dem Elektromotor beziehungsweise Generator ausgestattet sind. Durch den Einsatz des erfindungsgemäßen Elektromotors erfährt auch ein Turbolader, eine Fördervorrichtung, eine Lüftungseinrichtung oder eine Pumpe eine entsprechende Verbesserung, da die so ausgestatteten erfindungsgemäßen Gegenstände einen geringen Platzbedarf haben, da der Elektroantrieb als Elektromotor im Förderkreislauf bereits integrierbar ist und kein zusätzliches Bauvolumen benötigt.

Gleiches ist auch bei einer Turbine oder eine Vorrichtung zur Medienflussmessung mit dem erfindungsgemäß ebenfalls vorgeschlagenem Generator erreichbar.

Die Erfindung ist in der Zeichnung schematisch dargestellt.

### Es zeigen:

- Fig. 1: in einer Draufsicht den Stator des erfindungsgemäßen Elektromotrs beziehungsweise Generator;
- Fig. 2: in einer teilweisen Schnittdarstellung beziehungsweise Draufsicht (insbesondere im rechten Bereich der Zeichnung) ein Beispiel des erfindungsgemäßen Elektromotors beziehungsweise Generators;
- Fig. 3: in einem Schnitt in Draufsicht ein weiteres Beispiel des erfindungsgemäßen Elektromotors beziehungs Generators;
- Fig. 4a: in einer Draufsicht ein weiteres Realisierungsbeispiel des Stators nach der Erfindung;
- Fig. 4b: eine Seitenansicht nach Fig. 4a;
- Fig. 5: in einer dreidimensionalen Ansicht ein weiteres Ausführungsbeispiel des Stators nach der Erfindung;
- Fig. 6: der Einsatz des erfindungsgemäßen Elektromotors in einem Turbolader in einer Seitenansicht;
- Fig. 7: in einer Seitenansicht die Verwendung des erfindungsgemäßen Elektromotors in einer Kreiselpumpe oder Verdichter und
- Fig. 8: in einer dreidimensionalen Ansicht den erfindungsgemäßen Elektromotor.

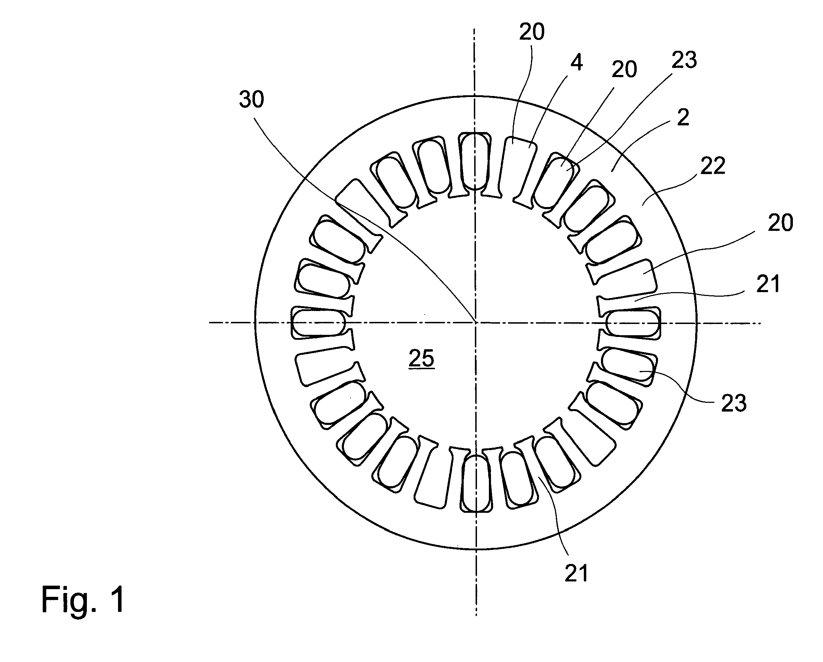

In Fig. 1 ist der Stator 2 eines erfindungsgemäßen Elektromotores schematisch dargestellt. Der Stator 2 ist in dem hier gezeigten Ausführungsbeispiel gebildet aus einem Ring, der an seinem äußeren Ende den Statorrücken 22 aufweist und auf der inneren Seite von Statorzähnen 21 begrenzte Statornuten 20 besitzt. Die Anordnung der Statornuten 20 beziehungsweise der Statorzähne 21 ist regelmäßig, die einzelnen Statorzähne besitzen gleiche Größe, auch die Statornuten 20 sind jeweils gleichartig ausgebildet. Sie umschließen ring- beziehungsweise kreisartig die Innenquerschnittsfläche 25 des Stators 2.

Im Anwendungsfall nach dem Stand der Technik wird die Innenquerschnittsfläche 25 vollständig von dem hier nicht gezeigten Rotor 3 ausgefüllt, wodurch sich ein sehr geringer Luftspalt zwischen Rotor und Stator ergibt.

Bei den herkömmlichen Anwendungen, wie im Stand der Technik gezeigt, ist dann hier kein Raum mehr vorhanden, der als Durchflussöffnung für zu fördernde Medien dient.

Erfindungsgemäß wird jetzt vorgeschlagen, dass ein Teil der Statornut/en 20 als Mediendurchflussöffnung 4 dient.

Dies wird dadurch erreicht, dass nicht alle Statornuten 20 eine Statorwicklung 23 aufnehmen, sondern, wie in dem hier ausgeführten Beispiel, jede vierte Statornut frei bleibt und somit als Mediendurchflussöffnung 4 dient. Zwar werden dadurch die magnetischen Eigenschaften beziehungsweise die Eigenschaften des Elektromotors beziehungsweise Generators etwas geschwächt, dies ist aber problemlos tolerierbar, da dadurch eine Anordnung des Elektromotors unmittelbar im Medienkreislauf möglich ist, ohne rotierende Wellen abdichten zu müssen, was oftmals sehr kompliziert und aufwendig ist.

Das vorbeschriebene erfindungsgemäße Konzept kann nun in verschiedenster Weise realisiert werden.

Der in Fig. 1 dargestellte Stator besitzt insgesamt 24 äquidistant auf die Innenseite des Stators angeordnete Statornuten, bei welchem jede vierte Statornut ohne Statorwicklung 23 ausgestattet ist und so eine Mediendurchflussöffnung 4 bildet.

Hier entgegen ist in Fig. 2 ein anderes Ausführungsbeispiel gezeigt. In Fig. 2 besitzt der Stator 2 nur drei Statorzähne 21, die in einem Umfangswinkelabstand von 120° äquidistant im Stator 2 angeordnet sind.

Es ergibt sich, dass die überwiegende Querschnittsfläche des Stators 2 von drei Statornuten 20 gebildet ist. Es ist gut zu erkennen, dass mehr als die Hälfte der Innenquerschnittsfläche 25 des Stators 2 (ohne Berücksichtigung der Querschnittsfläche des Rotors 3) als Mediendurchflussöffnung 4 zur Verfügung steht. Erfindungsgemäß ist vorgesehen, dass die Querschnittsfläche der Mediendurchlassöffnung mindestens 50%, insbesondere mindestens 60%, bevorzugt mindestens 70% der Innenquerschnittsfläche des Stators 2 beträgt. Die Querschnittsfläche der Mediendurchlassöffnung ist dabei die Fläche rechtwinklig zur Strömungsrichtung des Mediums durch den Elektromotor beziehungsweise Generator.

Dabei wird ein möglichst großer Anteil der Innenquerschnittsfläche 25 angestrebt, der als Mediendurchlassöffnung 4 dient, um die Strömungsverluste möglichst gering zu halten.

Der Statorzahn 21 weist auf seinem, dem Rotor 3 zugewandten Ende eine flanschartige Verbreiterung 24 auf. Diese Verbreiterung 24 bewirkt eine bessere Verteilung des magnetischen Flusses und reduziert das magnetische Rastmoment. Der Statorzahn 21 hält die Statorwicklung 23, oder begrenzt diese.

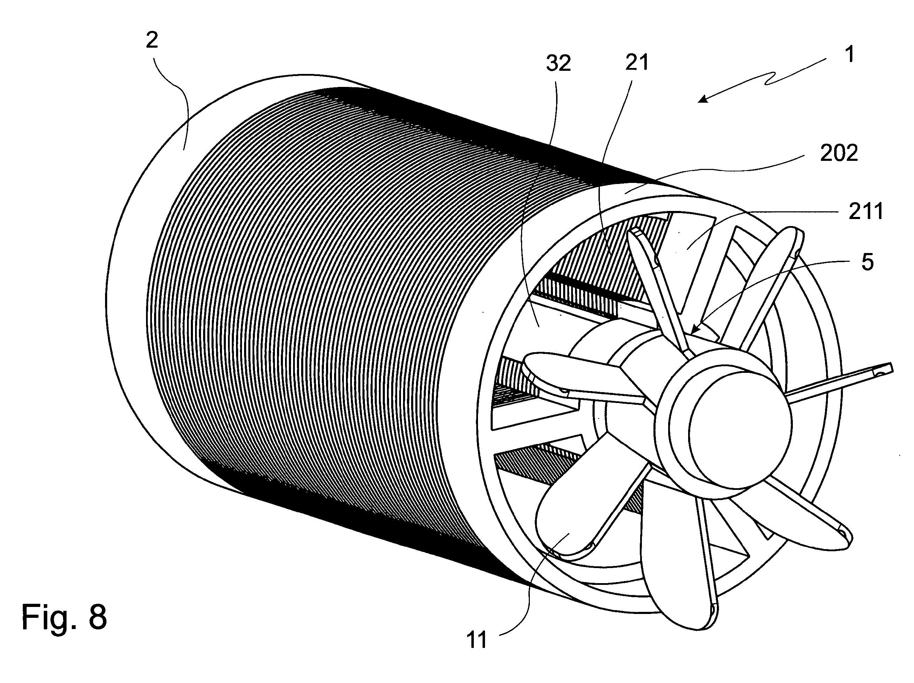

Ein weiterer Vorzug der Erfindung liegt darin, dass der Statorzahn 21 derart ausgebildet ist, dass er als Lagerung für den Rotor 3 dienen kann . Dies ist in Fig. 8 ebenfalls schematisch angedeutet. Die dem Rotor 3 zugewandte Stirnfläche 26 des Statorzahnes 21 ist hohlkehlenartig gerundet und zum Beispiel als Lager, zum Beispiel als Drehlager, für den Rotor 3 ausgebildet. Der verbleibende Luftspalt zwischen Rotor 3 und der Stirnfläche 26 ist hier verhältnismäßig groß gezeichnet, er kann auf ein absolutes Minimum reduziert werden.

Auf dem hier gezeigten Ausführungsbeispiel ergibt sich, dass die Statornuten 20 sich in Umfangsrichtung des Stators über einen großen Winkelbereich erstrecken und der Statornutbereich den Statorzahnbereich erheblich dominiert. So ist zum Beispiel in einer erfindungsgemäßen Variante vorgesehen, dass die Summe der Umfangswinkel der Statornuten größer als 300°, bevorzugt sogar größer als 330° ist, woraus eine sehr große verbleibende Mediendurchflussöffnung 4 resultiert, auch wenn in jeder Statornut 20 zumindest teilweise eine Statorwicklung 23 vorgesehen ist.

In Fig. 2 sind zwei Ansichten kombiniert. Die beiden linken Wicklungen sind geschnitten dargestellt, im Bereich der rechten Wicklung 23a ist der erfindungsgemäße Elektromotor beziehungsweise Generator in Draufsicht gezeigt. Dies dient insbesondere dazu, den Wickelkopf 203 zu zeigen, der sich ergibt, wenn die

Statorwicklung 23 über den Statorzahn 21, wie gezeigt, herumgeführt ist. Der Wickelkopf 203 dient zum Beispiel zur Aufnahme eines Lagers zur Lagerung der Rotorwelle 32.

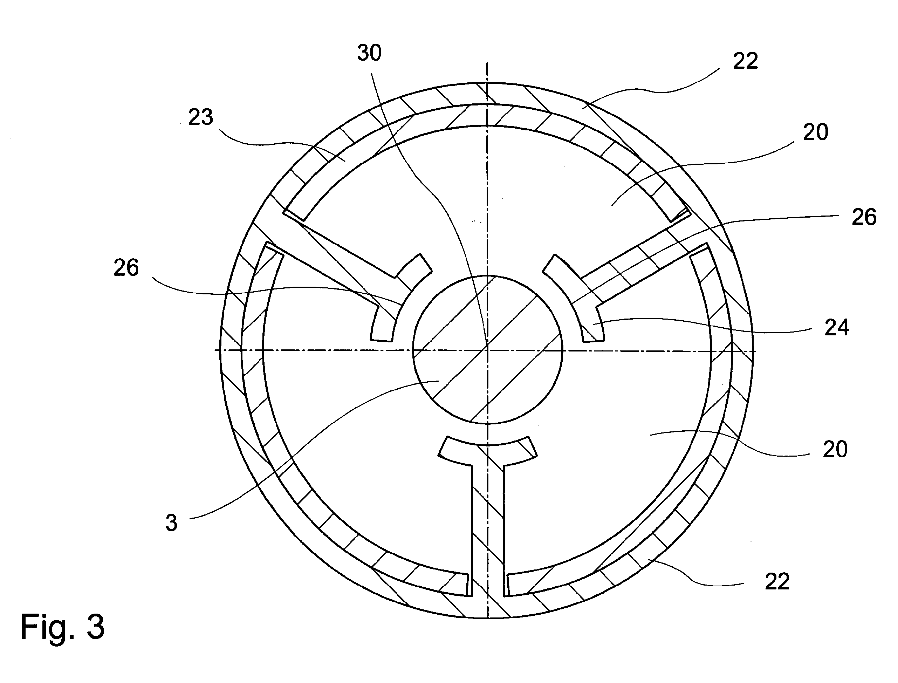

Die in Fig. 3 gezeigte Variante der Erfindung ist dem in Fig. 2 gezeigten Ausführungsbeispiel sehr ähnlich. Auch hier sind nur drei Statorzähne 21 vorgesehen, die den Statorinnenraum in drei verhältnismäßig große Statornuten 20 unterteilt.

Neben den etwas veränderten Maßen und Geometrien, die Statorzähne 21 sind schmäler als in dem in Fig. 2 gezeigten Ausführungsbeispiel (hieraus resultiert ein größerer Anteil für die Statornuten 20), ist auch hier die Statorwicklung 23 anders realisiert. Sie liegt hier an dem die Nut außen begrenzenden Statorrücken 22 an und ist in geeigneter Weise auf diesem befestigt. Zum Beispiel ist die Statorwicklung 23 eingegossen oder aufgeklebt. Es ist daher nicht zwingend notwendig, dass der Statorzahn 21 die Statorwicklung 23 hält.

In dem hier gezeigten Ausführungsbeispiel dient die Verbreiterung 24 zur Verbesserung des magnetischen Flusses sowie der Reduzierung des Rastmomentes. Desweiteren kann die Verbreiterung 24 zur Lagerung des Rotors dienen. Es ist klar, dass gegebenenfalls noch zusätzliche Lagerelemente einbaubar sind.

Auf dem Rotor 3 ist im Bereich des Stators 2, insbesondere im Bereich der Statorwicklung 23 (dessen auf die Rotationsachse 30 bezogene achsiale Position), der Rotormagnet angeordnet. Der Rotormagnet besitzt vorzugsweise eine verhältnismäßig hohe Remanenz und Energiedichte und besteht vorzugsweise aus Seltenerd-Metalle beziehungsweise Legierungen.

Fig. 4a und Fig. 4b zeigen eine zweite Variante der Ausgestaltung des Stators.

Üblicherweise besteht der Stator 2, wie er zum Beispiel in Fig. 2 oder 3 eingesetzt ist, aus einem Statorblech, aus welchem die Nutbereiche herausgestanzt sind und die Statorzähne 21 in der gleichen Ebene liegen wie der Statorrücken 22.

Von dieser Ausgestaltung weicht die Variante nach Fig. 4a, 4b wie folgt ab. Hier ist vorgesehen, dass der Statorzahn 21 in axialer Richtung der Rotationsachse 30 der Rotorwelle 32 (hier nicht gezeigt) abgewinkelt ist. Die Anordnung ist so gewählt, dass der Statorzahn 21 ab einer Knicklinie 27 in einer Strebe 28 gegenüber der durch den ringförmigen Statorrücken 22 definierten Ebene spitzwinklig nach oben verläuft (vergleiche Fig. 4b), um dann im oberen Bereich an einer zweiten Knicklinie 29 in die Verbreiterung 24 zu münden. Die Verbreiterung 24 ist dabei in einer Ebene angeordnet, die wiederum parallel ist zur Ebene des ringartigen Statorrückens 22. Die Anordnung ist dabei so gewählt, dass alle hier gezeichneten drei Statorzähne 21 im gleichartigen Winkel abgewinkelt sind und im oberen Bereich gleichartig an der zweiten Knicklinie 29 in eine Verbreiterung 24 münden, die jeweils in einer gemeinsamen, zur Ebene des Statorrückens parallelen Ebene liegen.

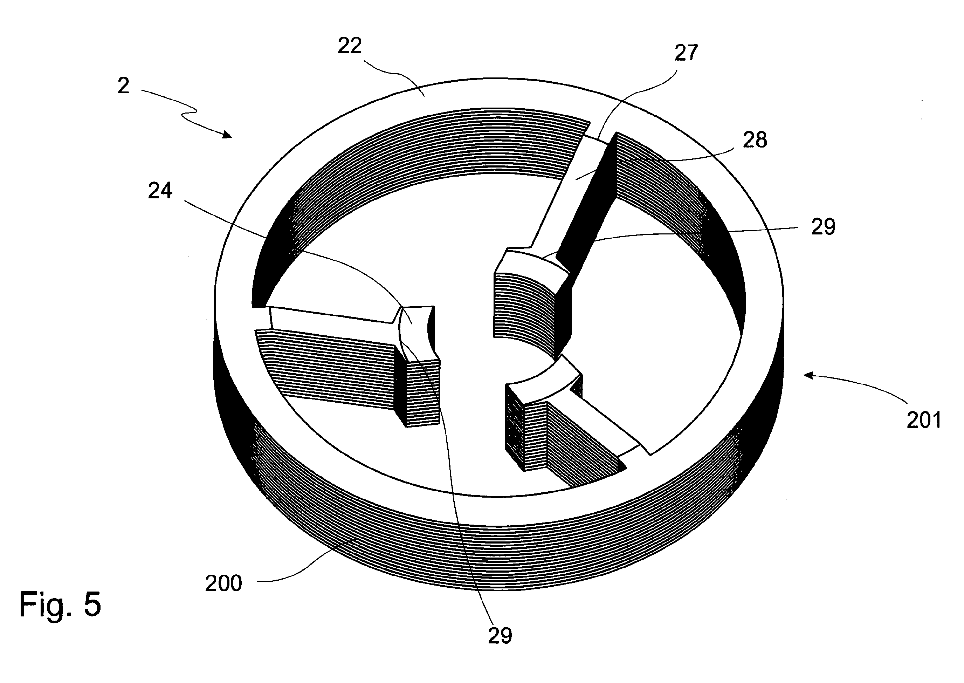

Stapelt man nun eine Vielzahl dieser gleichartigen Statorscheiben 200 gemäß Fig. 4b übereinander, so ergibt sich ein Statorpaket 201, wie er in Fig. 5 schematisch dargestellt ist. Eine Vielzahl von gleichartigen Statorscheiben 200 sind dabei übereinandergelegt, wobei hier der Bereich der Verbreiterung 24 niedriger liegt als der Statorrücken 22. Deutlich erkennbar ist die Abwinkelung beziehungsweise Knicklinie 27, an welcher die Strebe 28 des Statorzahnes 21 aus der Ebene des Statorrückens spitzwinkelig nach unten abgewinkelt wird, um dann im Bereich der Verbreiterung 24 an der ring- oder kreissegmentartigen Knicklinie 29 wieder in eine Ebene, die parallel ist zur Ebene des Statorrückens 22, zu münden.

Durch den scheibenweisen Aufbau ist es möglich, den Stator 2 in beliebiger Weise zu realisieren, die einzelnen Statorscheiben 200 werden dabei aus einem flächigen Statorblech ausgestanzt und/oder formgebend bearbeitet, also abgewinkelt.

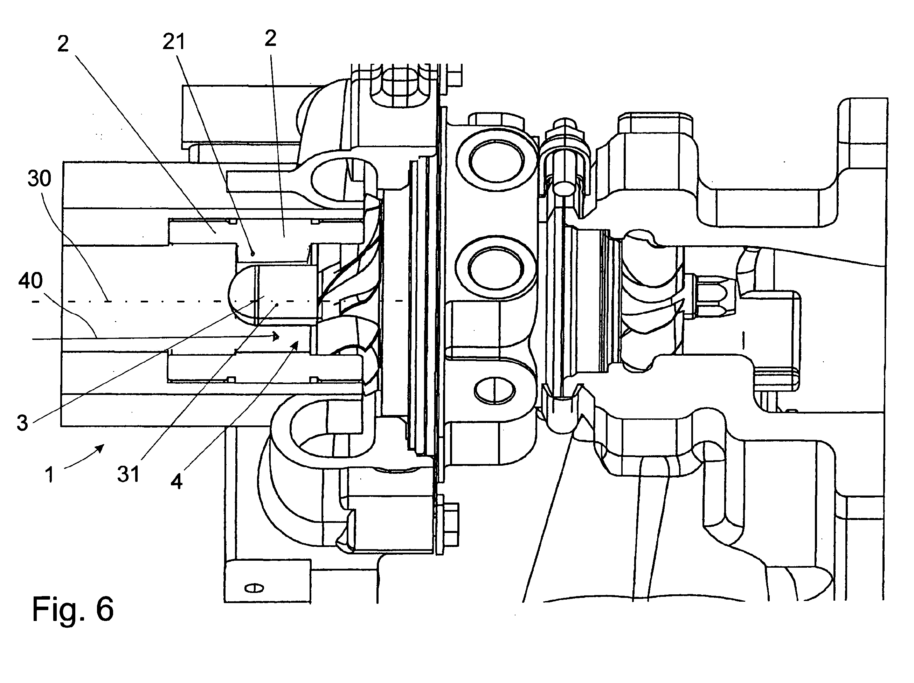

In Fig. 6 ist die Verwendung des erfindungsgemäßen Elektromotores 1 in einem Turbolader beispielhaft gezeigt.

Der Einsatz des schnell reagierenden, erfindungsgemäßen Elektromotors in einem elektrisch unterstützen Turbolader, hilft das Ansprechverhalten des Turboladers gerade bei geringen Drehzahlen erheblich zu verbessern. Es ist ein Vorteil des erfindungsgemäßen Elektromotors, dass dieser platzsparend genau dort einbaubar ist, wo ein Antrieb verwendet wird. Es ist daher möglich, einen schnell reagierenden, das heißt, mit verhältnismäßig geringen rotierenden Massen ausgestatteten Elektromotor zu realisieren, der in kürzerster Zeit aktivierbar ist.

Der Elektromotor 1 ist dabei von einem Stator 2 an der Außenseite gebildet, ein Statorzahn 21 ist gut erkennbar.

Auf dem Rotor 3 befindet sich ein Rotormagnet 31, die Rotorwelle trägt das anzutreibende Turbinenrad, welches den Luftstrom verdichtet. Der Medienfluss, in dem Fall von Gas, insbesondere von Luft, ist mit 40 gekennzeichnet, dieser durchdringt den Elektromotor im Bereich der Mediendurchlassöffnung 4 im Elektromotor, welcher erfindungsgemäß in den Statornuten 20 vorgesehen ist. Im Bereich der Statornut ist dabei die Medienflussrichtung parallel zur Rotationsachse 30 des Rotors 3 und kann dann, je nach Ausgestaltung des Medienfördermittels, umgelenkt werden. Die Erfindung eignet sich sowohl als Radialwie auch als Axialantrieb des Mediums.

Das erfindungsgemäße Konzept ist sowohl in einem Elektromotor wie auch einem Generator einsetzbar. Es handelt sich dabei um einen Permanentmagnet-Synchronmotor oder einen Induktions-Asynchronmotor.

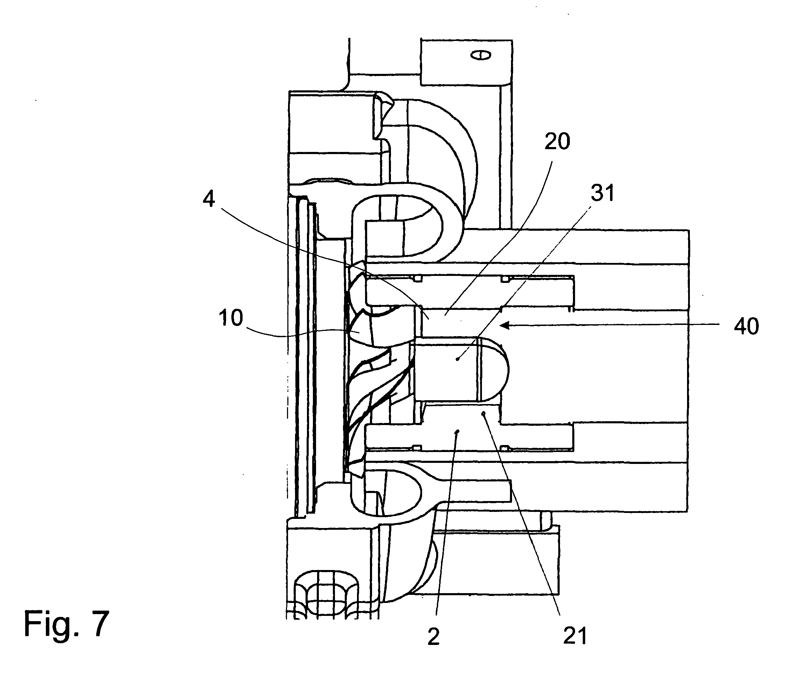

In Fig. 7 ist eine erfindungsgemäße Kreiselpumpe gezeigt, die mit Hilfe des erfindungsgemäßen Elektromotores angetrieben ist. Die den Rotor 3 tragende Rotorwelle trägt auch den medienfördernden Teil 10, zum Beispiel einen Förderpropeller oder ein Förderrad.

Auch hier erfolgt der Medienfluss 40 zumindest teilweise, wenn nicht sogar vollständig, durch die Mediendurchlassöffnungen 4 im Stator, insbesondere in den Statornuten 20.

In Fig. 8 ist der erfindungsgemäße Elektromotor 1 in einer dreidimensionalen Ansicht gezeigt. Der Stator 2 trägt drei äquidistant angeordnete Statorzähne 21. Das Lager 5 wird in dem hier gezeigten Ausführungsbeispiel in einer geometrisch gleichen oder ähnlichen (bezogen zur Rotationsachse 30 der Rotorwelle 32) Verlängerung 202 des Stators 2 beziehungsweise der Statorzähne 21, dem Wickelkopf oder des Vergusses der Statorwicklungen 23 realisiert. Die in Fig. 8 gezeigte Verlängerung 202 ist dabei ringartig mit einer gewissen Dicke (mehrere, ca. 5 bis 15 Statorscheiben 200 dick) und weist ebenfalls nach innen vorstehende, den Statorzähnen 21 entsprechende Zähne 211 auf.

Gleichzeitig sitzt ein Förderpropeller 11 als förderndes Teil (siehe Bezugsziffer 10 in Fig. 7) auf der Rotorwelle 32. Das zu fördernde Medium, dieses kann gasförmig oder flüssig oder auch pastös sein (dies fällt insofern unter eine flüssige Phase), wird durch die verhältnismäßig großen, zwischen den Statorzähnen 21 vorgesehenen Statornuten 20 gefördert. Ein wesentlicher Vorzug der Erfindung liegt darin, dass der gesamte Elektromotor im Strömungskreis angeordnet ist.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin.

Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Elektromotor, insbesondere zur Förderung von gasförmigen und/oder flüssigen Medien, oder Generator, wobei der Elektromotor (1) beziehungsweise Generator in den das Medium führenden Bereich einsetzbar ist und einen Rotormagneten (31) bzw. Kurzschlussläufer aufweisenden Rotor (3) und einen den Rotor (3) umgebenden Stator (2) aufweist und der Stator (2) mindestens eine von zumindest einem Statorzahn (21) begrenzte Statornut (20) aufweist und zumindest ein Teil der Statornut/en (20) als Mediendurchflussöffnung (4) für das zu fördernde Medium dient.

2. Elektromotor oder Generator nach Anspruch 1, **dadurch gekennzeichnet, dass** der Stator (2) mindestens zwei, bevorzugt eine durch drei teilbare Zahl von durch Statorzähne (21) unterteilte Statornuten (20) aufweist.

3. Elektromotor oder Generator nach einem oder beiden der vorhergehenden Ansprüche, **dadurch gekennzeichnet, dass** zumindest ein Teil der Statornut/en (20) je eine Statorwicklung (23) aufweist.

4. Elektromotor oder Generator nach einem oder mehreren der vorhergehenden Ansprüche, **dadurch gekennzeichnet, dass** eine oder mehrere Statornuten (20) ausschließlich als Mediendurchflussöffnung (4) dienen und/oder eine Statornut (20) nur teilweise mit einer Statorwicklung (23) ausgefüllt ist und im Übrigen diese Statornut (20) als Mediendurchlassöffnung (4) dient.

5. Elektromotor oder Generator nach einem oder mehreren der vorhergehenden Ansprüche, **dadurch gekennzeichnet, dass** das nach innen weisende Ende des Statorzahnes (21) eine Verbreiterung (24) besitzt und/oder der Statorzahn (21) als Lagerung für den Rotor (3) dient.

6. Elektromotor oder Generator nach einem oder mehreren der vorhergehenden Ansprüche, **dadurch gekennzeichnet, dass** der Elektromotor (1) beziehungsweise Generator mindestens drei in Umfangsrichtung äquidistant angeordnete Statorzähne (21) aufweist.

7. Elektromotor oder Generator nach einem oder mehreren der vorhergehenden Ansprüche, **dadurch gekennzeichnet, dass** die Summe der Umfangswinkel der Statornuten (20) größer als 300, bevorzugt größer als 330° ist und/oder die Querschnittsfläche der Mediendurchlassöffnung (4) mindestens 50 %, insbesondere mindestens 60 %, bevorzugt mindestens 70 % der Innenquerschnittsfläche des Stators (2) beträgt.

8. Elektromotor oder Generator nach einem oder mehreren der vorhergehenden Ansprüche, **dadurch gekennzeichnet, dass** der Stator (2) aus einer Mehrzahl hintereinander angeordneter, gleicher Statorscheiben (200) gebildet ist und/oder der Statorzahn (21) in axialer Richtung (30) abgewinkelt ist.

9. Elektromotor oder Generator nach einem oder mehreren der vorhergehenden Ansprüche, **dadurch gekennzeichnet, dass** die den Rotor (3) tragende Rotorwelle (32) auch einen medienfördernden Teil (10) oder medienangetriebenen Teil, insbesondere ein Förderrad, einen Förderpropeller (11) oder eine Förderschnecke aufweist und/oder der medienfördernde Teil (10) beziehungsweise medienangetriebene Teil an einem frei auskragenden Teil der Rotorwelle vorgesehen ist.

10. Elektromotor oder Generator nach einem oder mehreren der vorhergehenden Ansprüche, **gekennzeichnet durch** eine Innenverkleidung des Stators (2).

11. Elektromotor oder Generator nach einem oder mehreren der vorhergehenden Ansprüche, **dadurch gekennzeichnet, dass** das axiale Zentrum des Stators (2) und das axiale Zentrum des Rotors (3) in axialer Richtung der Rotationsachse (30) verschoben sind und/oder die Lagerung des Rotors (3) auf einer axialen Position innerhalb der Statorwicklung (23) vorgesehen ist und/oder der Elektromotor als Asynchronmotor oder als Permanentmagnet-Synchronmotor ausgebildet ist.

12. Elektromotor nach einem oder mehreren der vorhergehenden Ansprüche, zur Verwendung in einem elektrisch unterstützten Turbolader, oder zur Verwendung in einer Fördervorrichtung zum Transport explosiver Gase, Stäube, Dämpfe, Flüssigkeiten (z. B. Wasser, Öle), Lebensmittel, Pasten, verklebende Stoffe, oder zur Verwendung in Lüftungseinrichtungen oder Pumpen, insbesondere Pumpen für agressive Medien, wie z. B. Salzwasser, chemische Lösungen, im dentalen oder chirurgischen Bereich, in desinfizierbaren beziehungsweise sterilisierbaren Pumpen, Spaltrohrpumpen (Medientransporte in axialer Richtung), Dosierpumpen, Mikropumpen, Einwegpumpen, mehrstufen Pumpsystemen, Kreiselpumpen, oder zur Verwendung als Antrieb einer Fördervorrichtung unmittelbar in der Förderleitung.

13. Turbolader, Fördervorrichtung, Lüftungseinrichtung oder Pumpe mit einem Elektromotor, insbesondere mit einem hierin integriert realisierten Elektromotor, nach einem oder mehreren der vorhergehenden Ansprüche.

14. Generator nach einem oder mehreren der vorhergehenden Ansprüche 1 bis 11, zur Verwendung in einer Turbine, insbesondere einer Gas-, Wasser- oder Dampfturbine oder in Vorrichtungen zur Medienflussmessung, insbesondere durch Auswertung der Generatorspannung.

15. Turbine oder Vorrichtung zur Medienflussausnutzung mit einem Generator nach einem oder mehreren der vorhergehen den Ansprüche 1 bis 11.
